# EUROPÄISCHE PATENTSCHRIFT

(11) **EP 1 646 787 B1**
(45) Veröffentlichungstag und Bekanntmachung des Hinweises auf die Patenterteilung: **08.06.2016**
(21) Anmeldenummer: 04721840.9
(22) Anmeldetag: 19.03.2004
(51) Int. Cl.: F03D 80/00, A01K 61/00

(54) **WINDENERGIEANLAGE**
WIND ENERGY PLANT
EOLIENNE

(30) Priorität: 01.07.2003 DE 20310089 U
(43) Veröffentlichungstag der Anmeldung: 19.04.2006
(73) Patentinhaber: Wobben Properties GmbH, 26607 Aurich (DE)
(72) Erfinder:
(74) Vertreter: Eisenführ Speiser
(86) Internationale Anmeldenummer: PCT/EP2004/002863
(87) Internationale Veröffentlichungsnummer: WO 2005/003555

(56) Entgegenhaltungen:
- WO-A-01/23253
- US-A- 5 564 369
- SVANE: "On the Problems of Epibioses, Fouling and artificial Reefs, a Review" MARINE ECOLOGY, Bd. 22, Nr. 3, September 2001 (2001-09), Seiten 169-188, XP002287457 BERLIN ISSN: 0173-9565
- ERIC DELORT: "Analisys of Initial Fouling Process in Coastal Environment: Effects of Settlement, Attachment, and Metamorphosis Promoters." MARINE BIOTECHNOLOGY, Bd. 2, Nr. 3, Mai 2000 (2000-05), Seiten 224-230, XP002287458 NEWYORK ISSN: 1436-2236

## Beschreibung

Die Erfindung betrifft eine Windenergieanlage, sei es eine Offshore- oder eine Onshore-Windenergieanlage. Solche Offshore-Windenergieanlagen sind bereits schon gebaut worden, noch mehr werden jedoch derzeit geplant. Wann immer künstliche Bauwerke in die See gesetzt werden, so werden die entsprechenden Konstruktionen des Bauwerks, die unterhalb der Wasserlinie liegen, mit einer Beschichtung versehen, die das Bauwerk schützt. Insbesondere von Schiffen her ist es auch bekannt, dass diese außenseitig mit einem Schutzanstrich (TBT) versehen werden, welcher nicht nur chemisch äußerst problematisch ist, sondern auch dem Zweck dient, dass die Anlagerung von Meeresfauna und -flora bei Offshore-Windenergieanlagen so weit wie möglich verhindert wird. (Muscheln, Seepocken und weiteren Meereslebewesen)

Als Stand der Technik wird an dieser Stelle allgemein auf folgende Druckschriften hingewiesen: DE 199 46 899; P 27 19 081 sowie DE 298 14 313.

Die Erfindung schlägt nun vor, genau das Gegenteil dessen, was man bislang bei Bauwerken im Seebereich gemacht hat, bei Offshore-Windenergieanlagen durchzuführen, nämlich nicht etwa eine außenseitige Struktur vorzusehen, die eine Ansiedlung von Meeresfauna und -flora verhindert, sondern im Gegenteil stark unterstützt.

Der Erfindung liegt die Erkenntnis zu Grunde, dass eine Turmkonstruktion bei einer Offshore-Windenergieanlage oder eine sonstige irgendwie geartete Struktur der Windenergieanlage, die unter der Wasserlinie liegt, einen ganz besonders guten Schutz auch dadurch erhält, wenn sich auf ihr in hohem Maße Meereslebewesen ansiedeln. Ist beispielsweise die Oberfläche der unterhalb der Wasserlinie liegenden Struktur der Offshore-Windenergieanlage mit Muscheln überzogen, so bietet eine solche Muschelansiedlung schon einen hervorragenden Schutz gegen Wellenschläge und bildet gleichfalls auch eine natürliche Schicht, die den Angriff des relativ aggressiven Meerwassers verhindert.

Deshalb wird die unterhalb der Wasserlinie einer Offshore-Windenergieanlage liegende Struktur mit einer ersten Schutzschicht zu versehen, die das Eindringen von Wasser in die Struktur verhindert und auf dieser Schutzschicht ist dann eine weitere sehr raue Schicht aufgebracht, die eine Ansiedlung von Meeresfauna und -flora stark begünstigt. Zwischen den beiden vorhin genannten Schichten kann noch eine weitere zweite Schutzschicht vorgesehen sein, die verhindert, dass die sich ansiedelnde Meeresfauna und -flora die erste Schutzschicht auf der Struktur selbst angreift.

Die die Ansiedlung von Meeresfauna und -flora begünstigende Schicht ist so ausgebildet, dass sich bereits innerhalb von sehr kurzer Zeit, d.h. in weniger als einem Jahr, bereits in hohem Maße Muscheln, Seepocken oder andere Meeresfauna und -flora ansiedeln kann.

Als Ergänzung zu dem bisher Beschriebenen, ist es möglich, den Turm der Windenergieanlage im unteren Bereich mit einer Aufnahmeeinrichtung zu versehen. Eine solche Aufnahmeeinrichtung kann beispielsweise bei einer Offshore-Windenergieanlage dazu dienen, dass Muschelnetze, z. B. Austern-, Fischzuchtnetze bzw. andere Muschel- und Fischaufzuchteinrichtungen, aufgenommen bzw. gehalten werden. Mithin kann die Windenergieanlage in nicht geringem Maße dazu verwendet werden, die nützliche Aufzucht von Fischen, Muscheln, Schnecken und dergleichen zu unterstützen. Mithin bietet die erfindungsgemäße Offshore-Windenergieanlage die Möglichkeit, diese Anlage auch für bisher bekannte maritime Zwecke zu nutzen. Da bekanntlich die Wasserqualität auf hoher See regelmäßig besser ist als direkt im Küstenbereich, kann die erfindungsgemäße Windenergieanlage auch über die Stromgewinnung hinaus für maritime Zwecke eingesetzt werden, was insgesamt den Nutzen der Windenergieanlage erhöht.

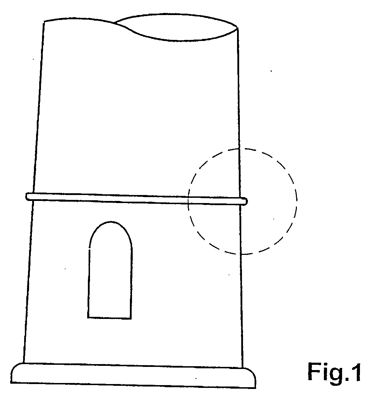

Wenn die Aufnahmeeinrichtung dazu ausgebildet ist, Stangen. Rohre oder andere Einrichtungen zum Halten eines Netzes im Offshore-Bereich aufzunehmen, so kann dies auch so erfolgen, dass die betroffene Netzeinrichtung stets in gleicher Höhe im Wasser schwebt, indem durch Schwimmkörper für einen entsprechenden Auf- und Abtrieb der Netze bei Tiede gesorgt wird. In Figur 1 ist hierfür ein Beispiel dargestellt, bei dem die Aufnahmeeinrichtung eine Klappkonstruktion aufnimmt, an der eine Netzkonstruktion aufgehängt ist, die über Gegengewichte in gleicher Meereshöhe gehalten wird.

Durch einen entsprechenden Seilzug und durch die gelenkige Ausführung kann die gesamte Einrichtung aus dem Wasser herausgehoben werden, wenn dies gewünscht ist.

Schließlich können die für Meerestiere notwendigen Futtermengen innerhalb eines Raumes der Windenergieanlage gespeichert werden und ferner kann durch eine automatische Futterzufuhr aus diesem Raum eine automatische Fütterung erfolgen. Hierzu ist beispielsweise ein Schneckenvortrieb vorgesehen, mittels dem Nahrung aus dem Futterbunker innerhalb der Windenergieanlage zur Fütterung geführt wird.

Besonders vorteilhaft ist, wenn die Aufnahmeeinrichtung so gestaltet ist, dass der davon aufgenommene Gegenstand in einer gewünschten Position am Turm geführt bzw. befestigt werden kann.

In Fig. 1 ist die Ansicht einer Windenergieanlage im unteren Bereich beschrieben. Dort ist zu erkennen, wie im unteren Bereich eine umlaufende und im Turm vollständig oder teilweise umlaufende Aufnahmeeinrichtung vorgesehen ist.

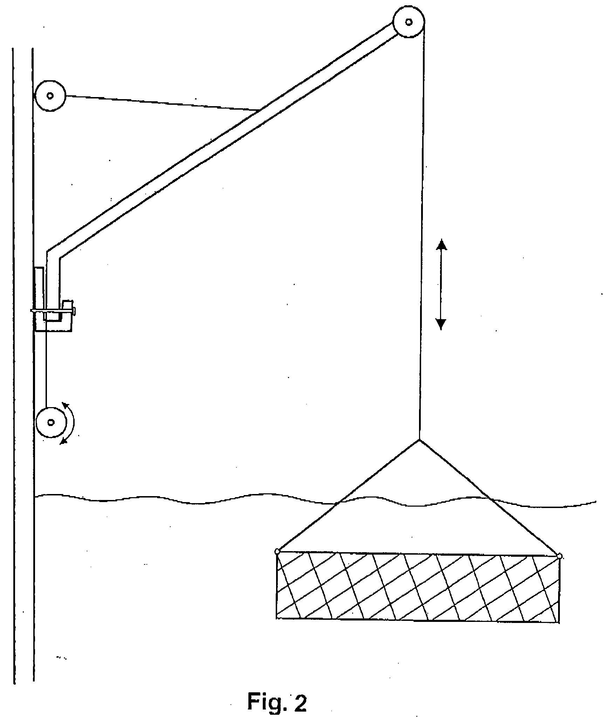

Fig. 2 zeigt, wie eine Aufnahmeeinrichtung im unteren Turmbereich einen Träger aufnimmt, an welchem beispielsweise ein Muschelkorb angehängt ist, welcher durch ein Seil und eine entsprechende Winde auf- und abfahrbar ist. Selbstverständlich gibt es eine Vielzahl weiterer Varianten für die Aufnahmeeinrichtung, die sich jedoch für den Fachmann in naheliegender Weise ergeben. Auch kann die Aufnahmeeinrichtung in festen Anschlusspunkten bestehen, an die die jeweiligen dargestellten Gegenstände befestigbar sind, sei es durch Schrauben, Splinte oder andere Befestigungsmittel.

## Patentansprüche

1. Offshore-Windenergieanlage mit einer unterhalb der Wasserlinie liegenden Struktur, die mit einer ersten Schutzschicht versehen ist, die das Eindringen von Wasser in die Struktur verhindert, wobei auf dieser ersten Schutzschicht eine weitere, sehr raue Schicht aufgebracht ist, die eine Ansiedlung von Meeresfauna und -flora stark begünstigt, indem sie so ausgebildet ist, dass sich bereits in weniger als einem Jahr Muscheln ansiedeln können.

2. Windenergieanlage nach Anspruch 1,
**dadurch gekennzeichnet, dass** die weitere sehr raue Schicht so ausgebildet ist, dass den Muschelbewuchs auf künstliche oder natürliche Weise begünstigt wird.

3. Windenergieanlage nach einem der vorgehenden Ansprüche,
**dadurch gekennzeichnet, dass** die weitere sehr raue Schicht die Rauigkeit von natürlichem Granit oder Sandsteinfels oder Sandstein aufweist, an die sich Muscheln leicht ansiedeln und festsetzen können.

4. Windenergieanlage nach einem der vorgehenden Ansprüche, mit einem Turm,
**dadurch gekennzeichnet, dass** der Turm der Windenergieanlage im Bereich der Wasserlinie oder einige Meter darunter oder darüber Aufhängeeinrichtungen aufweist, in die bevorzugt Muschelnetze, zum Beispiel Austernzuchtnetze und dergleichen, einhängbar sind.

5. Windenergieanlage nach einem der vorgehenden Ansprüche, mit einem Turm,
**dadurch gekennzeichnet, dass** der Turm der Windenergieanlage in einem unteren Bereich bevorzugt 1 bis 5 m über dem Erdboden eine Einrichtung zur Aufnahme eines anderen Gegenstandes, z. B. eine Halterung für Netze, aufweist.

6. Windenergieanlage nach Anspruch 5,
**dadurch gekennzeichnet, dass** die Aufnahmeeinrichtung eine im Wesentlichen den Turm der Windenergieanlage vollständig oder teilweise umfassende Schieneneinrichtung ist, die mit dem entsprechenden Gegenstand in Eingriff zu bringen ist, so dass der entsprechende Gegenstand an einer gewünschten Position am Turmumfang zu positionieren ist.

7. Windenergieanlage nach einem der vorgehenden Ansprüche 5 oder 6, **dadurch gekennzeichnet, dass** die Aufnahmeeinrichtung mit dem Turm verbunden ist, beispielsweise durch Verschrauben oder Verkeilung.

8. Windenergieanlage nach einem der vorgehenden Ansprüche 5-7,
**dadurch gekennzeichnet, dass** die Aufnahmeeinrichtung Haken aufweist, in die der Gegenstand einhängbar ist.

## Claims

1. Offshore wind turbine having a structure which is located below the water line and which is provided with a first protection layer which prevents water from being introduced into the structure, wherein on this first protection layer there is applied another very rough layer which significantly promotes colonisation by sea fauna and flora by being constructed in such a manner that mussels can already form colonies in less than one year.

2. Wind turbine according to claim 1,
**characterised in that** the additional very rough layer is constructed in such a manner that the mussel growth is promoted in an artificial or natural manner.

3. Wind turbine according to either of the preceding claims, **characterised in that** the additional very rough layer has the roughness of natural granite or sandstone rock or sandstone, on which mussels can easily form colonies and secure themselves.

4. Wind turbine according to any one of the preceding claims, having a tower,
**characterised in that** the tower of the wind turbine has in the region of the water line or a few metres below or above suspension devices in which mussel nets, for example, oyster farming nets and the like, can preferably be suspended.

5. Wind turbine according to any one of the preceding claims, having a tower,
**characterised in that** the tower of the wind turbine has in a lower region preferably from 1 to 5 m above the ground a device for receiving another object, for example, a retention member for nets.

6. Wind turbine according to claim 5,
**characterised in that** the receiving device is a rail device which substantially surrounds the tower of the wind turbine completely or partially and which is intended to be brought into engagement with the corresponding object so that the corresponding object is intended to be positioned at a desired position on the tower periphery.

7. Wind turbine according to either of the preceding claims 5 or 6, **characterised in that** the receiving device is connected to the tower, for example, by means of screwing or keying.

8. Wind turbine according to any one of the preceding claims 5 to 7, **characterised in that** the receiving device has hooks in which the object can be suspended.

## Revendications

1. Eolienne offshore avec une structure se trouvant sous la ligne d'eau, laquelle est pourvue d'une première couche de protection qui empêche la pénétration d'eau dans la structure, une autre couche très rugueuse étant appliquée sur cette première couche de protection, laquelle favorise fortement une implantation de la faune et flore marine en ce qu'elle est réalisée de sorte que des moules puissent déjà s'implanter en moins d'un an.

2. Eolienne selon la revendication 1,
**caractérisée en ce que** l'autre couche très rugueuse est réalisée de sorte qu'elle soit favorable à la croissance des moules de manière artificielle ou naturelle.

3. Eolienne selon l'une quelconque des revendications précédentes,
**caractérisée en ce que** l'autre couche très rugueuse présente la rugosité du granite naturel ou d'un rocher de grès ou du grès, sur lequel des moules peuvent facilement s'implanter et se fixer.

4. Eolienne selon l'une quelconque des revendications précédentes, avec une tour,
**caractérisée en ce que** la tour de l'éolienne présente dans la zone de la ligne d'eau, ou quelques mètres dessous ou dessus, des dispositifs de suspension, dans lesquels des filets de moule, par exemple des filets ostréicoles et similaires sont de préférence accrochables.

5. Eolienne selon l'une quelconque des revendications précédentes, avec une tour,
**caractérisée en ce que** la tour de l'éolienne présente dans une zone inférieure, de préférence de 1 à 5 m au-dessus du sol, un dispositif de réception d'un autre objet, par exemple un support pour des filets.

6. Eolienne selon la revendication 5,
**caractérisée en ce que** le dispositif de réception est un dispositif de rail comportant complètement ou en partie sensiblement la tour de l'éolienne, lequel doit être amené en engagement avec l'objet correspondant de sorte que l'objet correspondant soit à positionner dans une position souhaitée sur la périphérie de la tour.

7. Eolienne selon l'une quelconque des revendications précédentes 5 ou 6,
**caractérisée en ce que** le dispositif de réception est relié à la tour, par exemple par vissage ou clavetage.

8. Eolienne selon l'une quelconque des revendications précédentes 5 à 7,
**caractérisée en ce que** le dispositif de réception présente des crochets, dans lesquels l'objet est accrochable.
